# EUROPÄISCHE PATENTSCHRIFT

(11) **EP 1 720 056 B1**
(45) Veröffentlichungstag und Bekanntmachung des Hinweises auf die Patenterteilung: **26.11.2008**
(21) Anmeldenummer: 06001292.9
(22) Anmeldetag: 23.01.2006
(51) Int. Cl.: G02B 23/00, G02B 5/20

(54) **Fernglas**
Binocular
Jumelles

(30) Priorität: 02.05.2005 DE 102005020860
(43) Veröffentlichungstag der Anmeldung: 08.11.2006
(73) Patentinhaber: NOCTRON S.A.R.L., 8140 Bridel (LU)
(72) Erfinder: Diamantidis, Georg, 56307 Dernbach (DE)
(74) Vertreter: Ostertag, Reinhard

(56) Entgegenhaltungen:
- WO-A-02/059684
- WO-A-02/063370
- DE-A1- 3 909 434
- DE-A1- 4 326 531
- GB-A- 2 284 678
- US-A- 2 625 855
- US-A- 5 299 067
- US-A- 6 132 044
- US-A1- 2002 167 731

## Beschreibung

Die Erfindung betrifft eine Fernglas gemäß dem Oberbegriff des Anspruches 1.

Derartige Ferngläser sind als Binokulare bekannt.

Farbige Filter werden schon an optischen Geräten verwendet, um die Erkennbarkeit bestimmter Objekte zu verbessern.

Ein in der DE 39 09 434 C2 beschriebenes Filter weist neben einem im roten Wellenlängenbereich liegenden Durchlässigkeitsbereich eine zusätzliche Durchlässigkeitsbande in einem Wellenlängenbereich zwischen 400 und 525 nm auf, welche bei 470 nm ihr Maximum hat. Diese zusätzliche Durchlässigkeitsbande bei kürzeren Wellenlängen im Vergleich zu den Wellenlängen der Chlorophyllfluoreszenz erfüllt zwei Funktionen: Zum einen dient sie dazu, dem Betrachter die Umgebung, also Gegenstände und Lebewesen, welche kein Chlorophyll enthalten, in möglichst natürlichen Farben erscheinen zu lassen. Zum anderen berücksichtigt die zusätzliche Durchlässigkeitsbande die physiologische Besonderheit des menschlichen Auges, in dunkler Umgebung durch Lichtstrahlung in einem kürzeren Wellenlängenbereich in einen höheren Empfindlichkeitszustand gebracht werden zu können, der für den gesamten Wellenlängenbereich des sichtbaren Lichts, also auch für rotes Licht, wirksam ist.

Es wurde nun überraschend herausgefunden, dass man dann, wenn man derartige Filter als Linsen oder Filterscheiben eines Fernglases verwendet, wie im Anspruch 1 angegeben, im Auge Bilder erzeugt, die so erscheinen, wie wenn sie von einer matten satinierten Metallfläche getragen wären.

Man erhält so ästhetische Effekte, die ansonsten nur mit hohen Herstellungskosten erzielbar wären.

Ist das gefärbte optische Element eine Linse, hat dies den Vorteil, daß man für erfindungsgemäße Ferngläser die selben Gehäuse verwenden kann, wie für ein herkömmliches Fernglas. Man kann es somit auch in kleinen Stückzahlen wirtschaftlich bauen. Auch sind die Montagekosten unverändert, und man kann die gleichen ggf. automatisierten Montageeinrichtungen wie für die normalen Ferngläser verwenden.

Linsen schwächen jedoch in ihren dicken Bereichen stärker ab als in ihren dünnen Bereichen. Dies kann durch die unterschiedliche Dickenänderung der Linsen in radialer Richtung aber teilweise kompensiert werden, wenn beide Linsen gleich gefärbt sind, wie es in Anspruch 1 angegeben ist.

Vorteilhafte Weiterbildungen der Erfindung sind in Unteransprüchen angegeben.

Es ist vorteilhaft, wenn die zusätzliche Durchlässigkeitsbande eine Halbwertsbreite von 10 bis 20 nm aufweist. Durch eine schmale Durchlässigkeitsbreite wird die auf das menschliche Auge treffende Strahlung im Wellenlängenbereich des grünen Lichts stark auf Wellenlängen beschränkt, auf die das Auge empfindlich reagiert.

Wenn die zusätzliche Durchlässigkeitsbande den Bereich von etwa 530 bis etwa 560 nm reicht, wird der Wellenlängenbereich annähernd optimal getroffen, durch den das menschliche Auge in einen höheren Empfindlichkeitszustand gebracht wird.

Umfaßt die zusätzliche Durchlässigkeitsbande auch einen Wellenlängenbereich zwischen etwa 360 und etwa 430 nm, so tritt Strahlung mit einem Blauanteil durch das gefärbte optische Element hindurch, wodurch diese Objekte gut von rotes Licht abgebenden Objekten zu unterscheiden sind.

Es ist vorteilhaft, wenn die beiden Teilbanden der zusätzliche Durchlässigkeitsbande eine Halbwertsbbreite von etwa 10 bis etwa 20 nm haben. So kann ein Durchtritt von zur Erzielung des gewünschten Effektes unnötigem Licht verhindert werden.

Vorzugsweise sind die beiden Teilbanden nur etwa 15 nm breit. Dies führt zu dem gewünschten Effekt bei einem guten Verhältnis der Intensitäten von rotem und anderem Licht.

Reicht die zweite kurzwellige Teilbande von 360 bis 430 nm, so ist die Fernglasn auch in Hinsicht auf die Unterscheidbarkeit von chlorophyllfreien Objekten und chlorophyllhaltigen Pflanzen weiter optimiert.

Es ist besonders vorteilhaft, wenn die Transmissionen des Durchlässigkeitsbereichs im roten Wellenlängenbereich von 650 nm bis mindestens 800 nm und der zusätzlichen Duchlässigkeitsbande(n) für die beiden gefärbten optischen Elemente des Fernglases unterschiedlich sind. Mit dieser Maßnahme können die entsprechenden Durchlässigkeiten optimal aufeinander abgestimmt werden, um den Eindruck eines kontrastreichen Bildes auf satinierter Metalloberfläche zu vermitteln.

Bevorzugt liegt die Transmission des ersten Durchlässigkeitsbereichs, der im roten Wellenlängenbereich liegt, zwischen etwa 50 % und etwa 80 %, die Transmission der zusätzlichen Durchlässigkeitsbande zwischen etwa 10 % und etwa 80 %.

Für die beiden Teilbanden der zusätzlichen Durchlässigkeitsbande liegen die Transmissionen vorzugsweise zwischen etwa 25 % und etwa 35 % (kurzwellige Teilbande) und etwa 5 % und etwa 10 % (langwelligere Teilbande).

Mit diesen Verhältnissen der Transmissionen wird beiden gewünschten Effekten, der Sensibilisierung des menschlichen Auges und der Wiedergabe gleichsam auf einer satinierten Metalloberfläche Rechnung getragen.

Nachfolgend werden Ausführungsbeispiele der Erfindung anhand der Zeichnung näher beschrieben. In dieser zeigen:
- Figur 1:: schematisch ein Fernglas, welche das Gesehene wie auf einer mattierten Metallfläche liegend darstellt,
- Figur 2:: die spektrale Transmission zweier Linsen des in Figur 1 gezeigten Fernglases;
- Figur 3:: die spektrale Transmission eines abgewandelten Glases für das in Figur 1 gezeigten Fernglas; und
- Figur 4:: ein aus glasklaren Linsen aufgebautes Fernglas, welches den gleichen optischen Eindruck eines betrachteten Objektes liefert wie das Fernglas nach Figur 1.

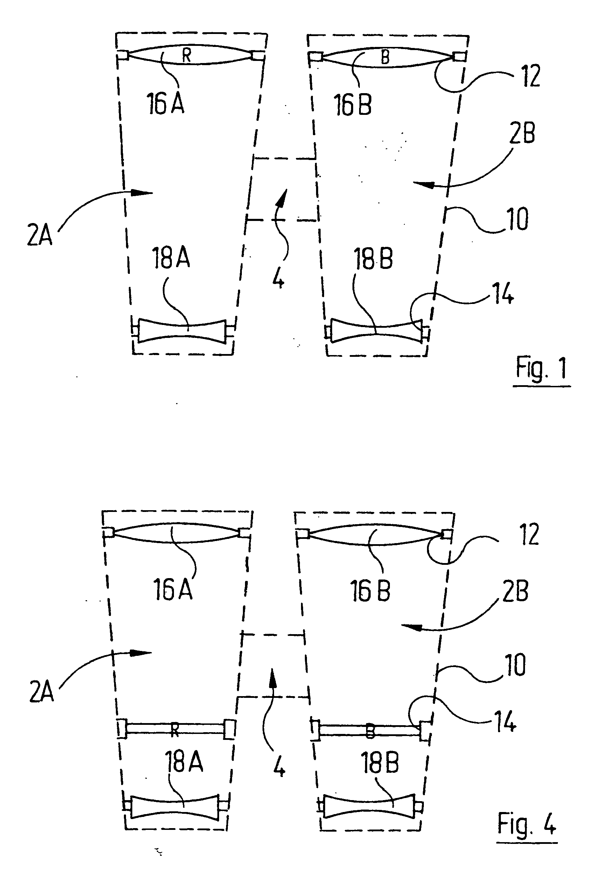

Figur 1 zeigt schematisch ein Fernglas, welches zwei gelenkig verbundene Monokulare 2A, 2B aufweist. Die Gelenkbrücke ist schematisch bei 4 angedeutet.

Wo es nachstehend auf die Unterscheidung der Monokulare 2A und 2B nicht ankommt wird einfach das Bezugszeichen 2 verwendet. Gleiches gilt für Komponenten der Monokulare 2, die symmetrisch vorgesehen sind.

Jedes Monokular 2 hat ein Gehäuse 10 welches zwei Linsenhalter 12, 14 aufweist, in welche zwei Linsen 16, 18 (Objektiv (bikonvex) bzw. Okular (bikonkav)) eingesetzt sind. Objektiv und Okular können auch durch Linsengruppen gebildet sein, wie an sich bekannt.

Eine der Linsen 16 und 18 ist jeweils rot-violett bzw. blauviolett gefärbt, wie durch Einschreiben von R bzw. B angedeutet. Man kann für die Linsen des Monokulares 2A und des Monokulares 2B wahlweise Linsen des gleichen Typs oder unterschiedlich gefärbte Linsen verwenden.

Beim Ausführungsbeispiel nach Figur 1 ist die Linse 16A rot-violett, die Linse 16B blauviolett gefärbt. Die Linsen 18 sind farblos.

Betrachtet man mit einer solchen Fernglas Bilder oder Gegenstände, so erhält der Benutzer der Fernglas ein Bild, das so aussieht, wie wenn es von einer satinierten Metalloberfläche getragen wäre.

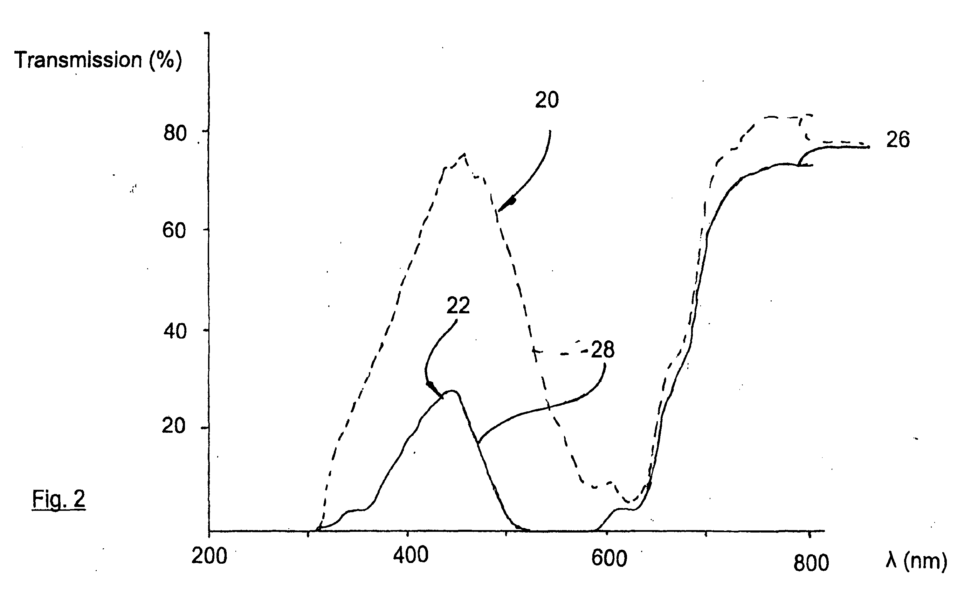

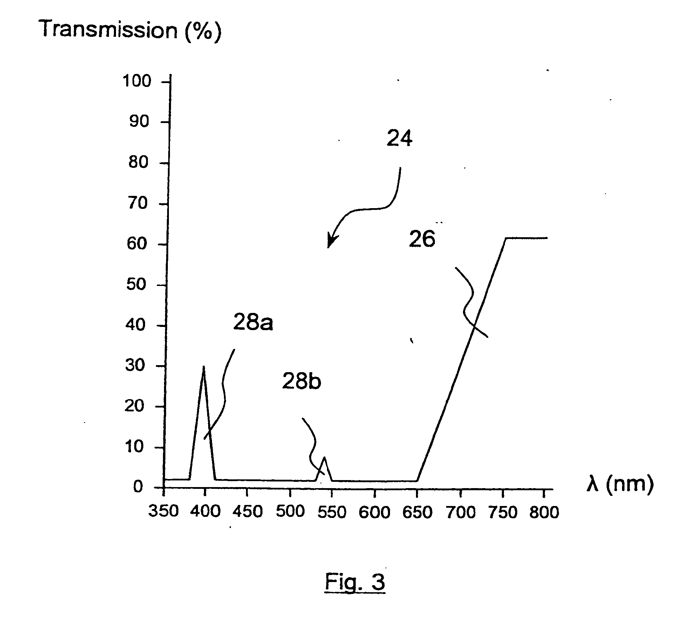

Die oben angegeben Farben rot-violett und blau-violett seien anhand von Transmissionsspektren 20, 22, 24 bevorzugter Linsen näher verdeutlicht, die in den Figuren 2 und 3 gezeigt sind.

Gemeinsam ist den gefärbte Linsen, dass sie im Roten eine hohe Durchlässigkeit von über 60 % bis etwa 80 % aufweisen. Dieser Durchlässigkeitsbereich 26 erstreckt sich bei den hier betrachteten Linsen zumindest über den Wellenlängenbereich, innerhalb dessen üblicherweise die Fluoreszenz von Chlorophyll beobachtet wird (etwa 650 nm bis mindestens 800 nm).

Ferner ist ihnen gemeinsam, dass sie zusätzlich eine Durchlässigkeitsbande 28 im Blauen aufweisen. Je nachdem, ob diese zusätzliche Bande im Vergleich zum Durchlässigkeitsbereich 26 vergleichbar hoch ist oder deutlich niederer, erscheinen die Linsen blau-violett bzw. rot-violett.

So ist in Figur 2 bei 20 das Spektrum eines blau-violetten Glases gezeigt. Bei ihr ist die maximale Durchlässigkeit im Blauen und die maximale Durchlässigkeit im Roten etwa gleich groß. Der Durchlässigkeitsbereich 26 im Roten erstreckt sich kantenfilterähnlich über einen weiten Bereich von 650 nm bis 800 nm und mehr. Die Durchlässigkeit im Blauen hat die Gestalt einer glockenförmigen Bande 28, deren Mitte bei etwa 450 nm liegt und deren Halbwertsbreite etwa 160 nm beträgt.

Bei 22 ist das Spektrum eines rot-violetten Glases gezeigt. Seine maximale Durchlässigkeit im Blauen beträgt etwa 40% der maximalen Durchlässigkeit im Roten. Letztere ist etwas kleiner als die im Spektrum 20. Die glockenförmige Bande 28 im Blauen hat ihre Mitte bei etwa 430 nm und hat eine Halbwertsbreite von etwa 100 nm

Figur 3 schematisch das Transmissionsspektrum 24 eines weiteren rot-violetten Glases.

Es hat einen roten Durchlässigkeitsbereich 26 mit einem Transmissionsgrad von 62 % im Wellenlängenbereich zwischen 650 bis mindestens 800 nm.

Neben dem Durchlässigkeitsbereich 26 reicht eine erste Teilbande 28a einer zusätzlichen Durchlässigkeitsbande 28 mit einer mittleren Transmission von 30 % von etwa 380 nm bis etwa 410 nm . Eine zweite Teilbande 28b der zusätzlichen Durchlässigkeitsbande 28 hat eine Maximum der Transmission von 8 % und reicht von etwa 530 nm bis etwa 550 nm.

Die Teilbande 28b dient dazu, eine physiologische Besonderheit des menschlichen Auges vorteilhaft auszunutzen. Das menschliche Auge weist eine hohe Empfindlichkeit im spektralen Bereich des grünen sichtbaren Lichtes auf. Trifft nun neben Licht mit einer Wellenlänge im langwelligen Bereich noch zusätzlich ein Anteil Licht mit einer Wellenlänge im Bereich des grünen sichtbaren Lichtes auf das menschliche Auge, so wird dessen Empfindlichkeit generell stark erhöht und die rote Strahlung erheblich besser erkannt.

Dabei soll die auf das menschliche Auge treffende grüne Strahlung nicht zu intensiv sein, da es sonst zu einer Überreaktion des Auges kommen kann.

Durch die gezielte Anordnung der Teilbande 28b im Bereich von 530 und 550 nm mit einer relativ geringen Durchlässigkeit wird die oben angesprochene Grünempfindlichkeit des menschlichen Auges genutzt.

Wie oben dargelegt kann man das Fernglas wahlweise mit Linsen bestücken, die gleiche oder unterschiedliche Filterfunktion haben. Man erhält durch den im Roten liegenden Durchlässigkeitsbereich 26 und die zusätzliche Durchlässigkeitsbande 28 insgesamt ein Bild eines Objektes im menschlichen Auge, das den Eindruck eines Bildes vermittelt, das von einer fein mattierten oder satinierten Metalloberfläche getragen ist.

Die Durchlässigkeitsbande 28 erfüllt ferner den Zweck, einen gewissen Farbeindruck mit unterschiedlichen Farben zu erhalten, um so generell die Unterscheidbarkeit von Objekten zu erhöhen.

Die Betrachtung eines entfernten Objektes mit einem Fernglas, das Linsen mit einer Teilbande 28b umfaßt, stellt sicher, dass die Empfindlichkeit des menschlichen Auges im grünen Bereich für ein gutes Erkennen des Objektes ausgenutzt wird, ohne das Auge überzustrapazieren und zu ermüden.

Für den Rotanteil der von dem Objekt abgegebenen Strahlung ist das Fernglasnglas besser durchlässig als für grüne Strahlung. In dem durch das Fernglas hindurchtretenden Licht ist daher das Intensitätsverhältnis von rotem zu grünem Licht zugunsten des roten Lichts verschoben.

Dies hat zur Folge, dass das Bild des Objektes dem Betrachter rot-violett erscheint. Eine rasche Ermüdung des Auges tritt bei dem angenehmen, die Augen nicht strapazierenden rot-violett erscheinenden Bild nicht auf.

Man kann bei dem oben beschriebenen Fernglas für die Linsen 16A und 16B und/oder die Linsen 18A, 18B unterschiedlich gefärbtes Glasmaterial verwenden, um den gewünschten Farbeffekt zu erzielen.

Das Ausführungsbeispiel nach Figur 4 hat aus glasklaren Linsen 14, 16 aufgebaute Monokulare 2. Um die oben beschriebene Färbung des Bildes zu erhalten, sind in den Strahlengang zusätzlich planparalle Platten 6 A, 6B gestellt, die aus Glassorten hergestellt sind, wie sie oben für die Linsen 16A und 16B beschrieben wurden. Die optische Wirkung ist die selbe, wie oben beschrieben, nur ist gewährleistet, daß die Intensitätsschwächung für alle Bildbereiche auf Grund der Planparallelität der Platten 6 genau gleich ist, während die Linsen 16 bzw. 18 in ihren dicken Bereichen stärker abschwächen als in ihren dünnen Bereichen. Dies kann durch die unterschiedliche Dickenänderung der Linsen 14, 16 in radialer Richtung aber teilweise kompensiert werden, wenn beide Linsen gleich gefärbt sind.

## Patentansprüche

1. Fernglas mit zwei Monokularen (2A, 2B), die Gehäuse (10) haben, welche jeweils mindestens zwei Halter (12, 14) für jeweils eine Linse (16, 18) umfassen, und mit jeweils mindestens einer in den Halter (12, 14) eingesetzten Linse (16, 18), wobei mindestens eines der Monokulare (2A, 2B) ein optisches Element (16, 18) umfaßt, welches rot-violett oder blauviolett gefärbt ist, **dadurch gekennzeichnet, dass** das gefärbte optische Element besagle Linsen (16, 18) des betrachteten Strahlenganges im dem mindestens einne Monokular (21,2B) umfasst die gleich gefärbt sind und deren Dicke sich in radialer Richtung gegensinng ändent um Variationen der Absdewadung in radialer Richtung in kompensieren.

2. Fernglas nach Anspruch 1, **dadurch gekennzeichnet, dass** die gefärbte Linse (16, 18) einen ersten Durchlässigkeitsbereich (26), der im spektralen Bereich der Chlorophyllfluoresenz zwischen etwa 650 nm und mindestens 800 nm liegt, und mindestens eine zusätzliche Durchlässigkeitsbande (28), die in einem kurzwelligeren Bereich von etwa 310 nm bis etwa 600 nm liegt, aufweist.

3. Fernglas nach Anspruch 2, **dadurch gekennzeichnet, dass** die zusätzliche Durchlässigkeitsbande (28) eine Halbwertsbreite von 50 bis 200 nm aufweist.

4. Fernglas nach Anspruch 3, **dadurch gekennzeichnet, dass** die zusätzliche Durchlässigkeitsbande (28) eine Halbwertsbreite von etwa 80 nm bis etwa 160 nm aufweist.

5. Fernglas nach Anspruch 4, **dadurch gekennzeichnet, dass** die Halbwertsbreite der zusätzlichen Durchlässigkeitsbande (28) von etwa 380 nm bis etwa 530 nm reicht.

6. Fernglas nach einem der Ansprüche 2 bis 5, **dadurch gekennzeichnet, dass** die zusätzliche Durchlässigkeitsbande (28) ein kurzwelliges Teilband (28a) in einem Wellenlängenbereich von etwa 360 nm bis etwa 430 nm und ein langwelligeres Teilband (28b) in einem Wellenlängenbereich von etwa 530 nm bis etwa 550 nm aufweist.

7. Fernglas nach Anspruch 6, **dadurch gekennzeichnet, dass** die Teilbänder (28a, 28b) eine Halbwertsbbreite von etwa 10 nm bis etwa 20 nm aufweisen.

8. Fernglas nach Anspruch 7, **dadurch gekennzeichnet, dass** die Teilbänder (28a, 28b) eine Halbwertsbreite von etwa 15 nm aufweisten.

9. Fernglas nach Anspruch 8, **dadurch gekennzeichnet, dass** das kurzwellige Teilband (28a) von etwa 380 nm bis etwa 410 nm reicht und das langwellige Teilband (28b) von etwa 530 nm bis etwa 560 nm reicht.

10. Fernglas nach einem der Ansprüch 2 bis 9, **dadurch gekennzeichnet, dass** die Transmissionen des ersten Durchlässigkeitsbereichs (26) und der zusätzlichen Durchlässigkeitsbande (28) unterschiedlich sind.

11. Fernglas nach einem der Ansprüche 2 bis 10, **dadurch gekennzeichnet, dass** die Transmission des ersten Durchlässigkeitsbereichs (26) zwischen etwa 50 % und etwa 80 % und die Transmission der zusätzlichen Durchlässigkeitsbande (28) zwischen etwa 10 % und etwa 80 % beträgt.

12. Fernglas nach Anspruch 11 in Verbindung mit Anspruch 6, **dadurch gekennzeichnet, dass** dass die Transmission der kurzwelligeren Teilbande (28a) zwischen etwa 25 % und etwa 35 % und die der langwelligeren Teilbande (28b) zwischen etwa 5% und etwa 10% liegt.

13. Fernglas nach Anspruch 11, **dadurch gekennzeichnet, dass** die Transmission des ersten Durchlässigkeitsbereichs (26) etwa 62%, die Transmission der ersten zusätzlichen Teilbande (28a) etwa 30 % und die Transmission der zweiten Teilbande (28b) etwa 8 % beträgt.

14. Fernglas nach einem der Ansprüch 2 bis 13, **dadurch gekennzeichnet, daß** die gefärbten optischen Linsen (16, 18) der beiden Monokulare (2A, 2B) unterschiedliche Transmission in der zusätzlichen Durchlässigkeitsbande (28) haben.

15. Fernglas nach Anspruch 14, **dadurch gekennzeichnet, dass** das Verhältnis der beiden Transmissionen der zusätzlichen Durchlässigkeitsbanden (28) zwischen etwa 1:4 und etwa 1:3 liegt.

16. Fernglas nach Anspruch 15, **dadurch gekennzeichnet, dass** die Transmission der zusätzlichen Durchlässigkeitsbande bei der einen gefärbten Linse (16A, 16B; 18A, 18B) etwa 75 % und bei der anderen gefärbten Linse (16B, 16A; 18B, 18A) etwa 30 % beträgt und die Transmission im ersten Durchlässigkeitsbereich bei der einen Linse (16A, 16B; 18A, 18B) etwa 85 % und bei der anderen Linse (16B, 16A; 18B, 18A) etwa 75 % beträgt.

## Claims

1. Binoculars exhibiting two monoculars (2A, 2B) which have casings (10) that each comprise at least two holders (12, 14) for a respective lens (16, 18), and with, in each instance, at least one lens (16, 18) inserted into the holder (12, 14), wherein at least one of the monoculars (2A, 2B) comprises an optical element (16, 18) that is red-violet or blue-violet tinted, **characterised in that** the tinted optical element (16, 18) comprises said lenses (16, 18) of the optical path under consideration within the at least one monocular (2A, 2B) which are identically tinted and whose thicknesses change in opposite senses in the radial direction for compensating variations of the attenuation in radial direction.

2. Binoculars according to claim 1, **characterised in that** the tinted lense (16, 18) exhibits a first transmissivity range (26) with lies within the spectral region of chlorophyll fluorescence between about 650 nm and at least 800 nm, and at least one additional transmissivity band which lies within a shorter wavelength region from about 310 nm to about 600 nm.

3. Binoculars according to claim 2, **characterised in that** the additional transmissivity band (28) exhibits a half-value width from 50 to 200 nm.

4. Binoculars according to claim 3, **characterised in that** the additional transmissivity band (28) exhibits a half-value width from about 80 nm to about 160 nm.

5. Binoculars according to claim 4, **characterised in that** the half-value width of the additional transmissivity band (28) ranges from about 380 nm to about 530 nm.

6. Binoculars according to one of the claims 2 to 5, **characterised in that** the additional transmissivity band (28) exhibits a short-wavelength sub-band (28a) within a wavelength range from about 360 nm to about 430 nm and a longer-wavelength sub-band (28b) within a wavelength range from about 530 nm to about 550 nm.

7. Binoculars according to claim 6, **characterised in that** the sub-bands (28a, 28b) exhibit a half-value width from about 10 nm to about 20 nm.

8. Binoculars according to claim 7, **characterised in that** the sub-bands (28a, 28b) exhibit a half-value width of about 15 nm.

9. Binoculars according to claim 8, **characterised in that** the short-wavelength sub-band (28a) ranges from about 380 nm to about 410 nm and the long-wavelength sub-band (28b) ranges from about 530 nm to about 560 nm.

10. Binoculars according to one of the claims 2 to 9, **characterised in that** the transmissions of the first transmissivity range (26) and of the additional transmissivity band (28) are different.

11. Binoculars according to one of the claims 2 to 10, **characterised in that** the transmission of the first transmissivity range (26) amounts to between about 50 % and about 80 % and the transmission of the additional transmissivity band (28) amounts to between 10 % and about 80 %.

12. Binoculars according to claim 11 in connection with claim 6, **characterised in that** the transmission of the shorter-wavelength sub-band (28a) ranges between about 25 % and about 35 %, and that of the longer-wavelength sub-band (28b) ranges between about 5 % and about 10 %.

13. Binoculars according to claim 11, **characterised in that** the transmission of the first transmissivity range (26) amounts to about 62 %, the transmission of the first additional sub-band (28a) amounts to about 30 %, and the transmission of the second sub-band (28b) amounts to about 8 %.

14. Binoculars according to one of the claims 2 to 13, **characterised in that** the tinted optical lenses (16, 18) of the two monoculars (2A, 2B) have differing transmission in the additional transmissivity band (28).

15. Binoculars according to claim 14, **characterised in that** the ratio of the two transmissions of the additional transmissivity bands (28) ranges between about 1:4 and about 1:3.

16. Binoculars according to claim 15, **characterised in that** the transmission of the additional transmissivity band of the one tinted lens (16A, 16B; 18A, 18B) amounts to about 75 % and of the other tinted lens (16B, 16A; 18B, 18A) to about 30 %, and the transmission in the first transmissivity range of the one lens (16A, 16B; 18A, 18B) amounts to about 85 % and of the other lens (16B, 16A; 18B, 18A) to about 75 %.

## Revendications

1. Jumelles avec deux monoculaires (2A, 2B) qui ont des boîtiers (10) qui comprennent chacun au moins deux supports (12, 14) pour chaque fois une lentille (16, 18) et avec chaque fois au moins une lentille (16, 18) insérée dans le support (12, 14), au moins un des monoculaires (2A, 2B) comprenant un élément optique (16, 18) qui est teinté en rouge-violet ou bleu-violet, **caractérisées en ce que** l'élément optique teinté comprend lesdites lentilles (16, 18) du chemin optique considéré dans ledit au moins un monoculaire (2A, 2B) qui sont de la même teinte et dont l'épaisseur change en sens contraire, en direction radiale, pour compenser des variations de l'affaiblissement en direction radiale.

2. Jumelles selon la revendication 1, **caractérisées en ce que** la lentille teintée (16, 18) présente une première gamme de transmissibilité (26) qui se situe dans le domaine spectral de la fluorescence chlorophyllienne compris entre environ 650 nm et au moins 800 nm, et au moins une bande de transmissibilité supplémentaire (28) qui se situe dans une gamme de longueur d'onde plus courte d'environ 310 nm à environ 600 nm.

3. Jumelles selon la revendication 2, **caractérisées en ce que** la bande de transmissibilité supplémentaire (28) présente une largeur à mi-hauteur de 50 à 200 nm.

4. Jumelles selon la revendication 3, **caractérisées en ce que** la bande de transmissibilité supplémentaire (28) présente une largeur à mi-hauteur d'environ 80 nm à environ 160 nm.

5. Jumelles selon la revendication 4, **caractérisées en ce que** la largeur à mi-hauteur de la bande de transmissibilité supplémentaire (28) s'étend d'environ 380 nm à environ 530 nm.

6. Jumelles selon l'une des revendications 2 à 5, **caractérisées en ce que** la bande de transmissibilité supplémentaire (28) présente une bande partielle (28a) de courte longueur d'onde dans une gamme de longueur d'onde d'environ 360 nm à environ 430 nm et une bande partielle (28b) de plus grande longueur d'onde dans une gamme de longueur d'onde d'environ 530 nm à environ 550 nm.

7. Jumelles selon la revendication 6, **caractérisées en ce que** les bandes partielles (28a, 28b) présentent une largeur à mi-hauteur d'environ 10 nm à environ 20 nm.

8. Jumelles selon la revendication 7, **caractérisées en ce que** les bandes partielles (28a, 28b) présentent une largeur à mi-hauteur d'environ 15 nm.

9. Jumelles selon la revendication 8, **caractérisées en ce que** la bande partielle de courte longueur d'onde (28a) s'étend d'environ 380 nm jusqu'à environ 410 nm et la bande partielle de grande longueur d'onde (28b) s'étend d'environ 530 nm jusqu'à environ 560 nm.

10. Jumelles selon l'une des revendications 2 à 9, **caractérisées en ce que** les transmissions de la première gamme de transmissibilité (26) et de la bande de transmissibilité supplémentaire (28) sont différentes.

11. Jumelles selon l'une des revendications 2 à 10, **caractérisées en ce que** la transmission de la première gamme de transmissibilité (26) est comprise entre environ 50 % et environ 80 % et la transmission de la bande de transmissibilité supplémentaire (28) entre environ 10 % et environ 80 %.

12. Jumelles selon la revendication 11 en relation avec la revendication 6, **caractérisées en ce que** la transmission de la bande partielle (28a) de plus courte longueur d'onde est comprise entre environ 25 % et environ 35 % et celle de la bande partielle (28b) de plus grande longueur d'onde entre environ 5 % et environ 10 %.

13. Jumelles selon la revendication 11, **caractérisées en ce que** la transmission de la première gamme de transmissibilité (26) est d'environ 62 %, la transmission de la première bande partielle supplémentaire (28a) d'environ 30 % et la transmission de la deuxième bande partielle (28b) d'environ 8 %.

14. Jumelles selon l'une des revendications 2 à 13, **caractérisées en ce que** les lentilles optiques teintées (16, 18) des deux monoculaires (2A, 2B) ont une transmission différente dans la bande de transmissibilité supplémentaire (28).

15. Jumelles selon la revendication 14, **caractérisées en ce que** le rapport des deux transmissions des bandes de transmissibilité supplémentaire (28) est compris entre environ 1:4 et environ 1:3.

16. Jumelles selon la revendication 15, **caractérisées en ce que** la transmission des bandes de transmissibilité supplémentaire est d'environ 75 % pour une lentille teintée (16A, 16B ; 18A, 18B) et d'environ 30 % pour l'autre lentille teintée (16B, 16A ; 18B, 18A) et la transmission dans la première gamme de transmissibilité est d'environ 85 % pour une lentille (16A, 16B ; 18A, 18B) et d'environ 75 % pour l'autre lentille (16B, 16A ; 18B, 18A).
